# EUROPEAN PATENT APPLICATION

(11) **EP 4 220 886 A1**
(43) Date of publication of application: **02.08.2023**
(21) Application number: 22154457.0
(22) Date of filing: 01.02.2022
(51) Int. Cl.: H02J 3/32, H02J 3/38

(54) **OPERATING A PLANT DURING LOW NATURAL POWER**

(71) Applicant: Siemens Gamesa Renewable Energy A/S, 7330 Brande (DK)
(72) Inventor: Christensen, Peter Schmidt, 8766 Nørre Snede (DK); Nielsen, Lars Holm, 8766 Noerre Snede (DK)
(74) Representative: SGRE-Association

(57) **Abstract**

It is described a method of controlling a natural energy production plant (1) connectable/connected to a utility grid (8) and comprising plural energy production entities (2a,2b,...,2f), in particular wind turbines, during insufficient natural energy availability, the method comprising: providing first power (PI) from an energy storage system (23) to the energy production entities (2a,2b,...,2f); measuring second power (P2) provided to the energy production entities (2a,2b,...,2f) from the utility grid (8); controlling, in particular by a plant controller (4) and/or respective energy production entity controllers (5a), the energy production entities (2a,2b,...,2f) and/or the energy storage system (23) based on the first power (PI) and/or the second power (P2) and/or a charge state of the energy storage system (23).

## Description

### Field of invention

The present invention relates to a method and an arrangement of controlling a natural energy production plant which is connectable or connected to a utility grid and comprising plural energy production entities, during insufficient natural energy availability. Furthermore, the present invention relates to a natural energy production plant, in particular comprising plural wind turbines.

### Art Background

A conventional wind park comprising plural wind turbines converts wind power into rotational motion which is then converted into electrical power using a power conversion system. Similarly, a solar plant comprising photovoltaic cells converts sun power into electrical energy. In a wind turbine, the power conversion system includes a wind turbine rotor having mounted thereon aerodynamic rotor blades, a transmission system or gearbox, a generator and transformers, as well as a power conditioning system which may include high power frequency converters. The electrical power generated by a wind park or a solar park is then supplied to an electrical power grid or also referred to as utility grid from which plural consumers may receive electrical power. The solar panels or photovoltaic cells comprised in a solar park convert the sun power into electrical power which is transported to the utility grid over a power conversion system of inverters, converters and transformers.

Due to the design of the power conversion system and/or inefficiencies in the power conversion system, the power plant may not be able to produce power at all wind speeds or all degrees of sun irradiance. Typically, a wind park has a cut-in wind speed and/or cut-in rotor speed which may be the minimum required wind speed or rotor speed beyond of which the wind park or wind turbine can produce and deliver power to the electrical utility grid. Similarly, a solar plant may be associated with a minimum sun irradiance beyond of which power can be produced. A solar plant for example is not producing energy during night times and dark periods.

When the wind speed or rotor speed of a wind turbine or a wind park is below the cut-in speed, then power must be consumed by the power plant to power or energize systems which are necessary for operation and protection. These systems or components of the plant may be referred to auxiliary systems and may include components such as pumps, fans, motors as well as lights, heaters, control systems, UPS and communication systems. The power consumption of these systems may range from only a few Watts to over 100 kW or more, depending on the operational state and size of the individual power plant.

For a plant operator, this power consumption may result in high costs as the power may be needed to be purchased from an electrical network or utility grid when prices are high. Power plants with multiple wind turbines, transformers and inverters require power to be received from the utility grid in a conventional manner. Thus, at periods during low natural power availability, energy consumption is conventionally required to be served from the utility grid, i.e. a network outside the wind park or solar park, in order to power the auxiliary systems within the power plant. Moreover, when there is a fault in the power plant, also power may be required to be received from the utility grid, in order to operate the auxiliary systems.

Conventionally, high power consumers within the wind park or solar park may be deactivated, to reduce the amount of power consumed by systems during periods of low wind or no power from the sun. The consumers may include cooling pumps and fans which are not necessarily required to cool the wind turbine when it is not in normal operation. However, many systems may be necessary to preserve the health of the wind turbine and data collection systems and inverters in the solar parks. For example, for offshore wind turbines, dehumidifiers and heaters may be necessary to maintain a climate within the wind turbine that prevents the build-up of moisture and salt on components. Communication systems and hazard avoidance systems such as aviation warning lights may also be essential to many wind turbines to allow monitoring of the health and state of the wind turbine and to avoid presenting a hazard to aircraft. Furthermore, the operational strategy of the turbine may involve adjustment of the pitch and yaw drives to ensure that the turbine can return to operation or staying out of the wind until the wind gains more power enabling idling and production. For this reason it has been proven very difficult for power plant operators to eliminate the power consumption taken from the electricity network.

Thus, there may be a need for a method and a corresponding arrangement of controlling a natural energy production plant which is connectable or connected to a utility grid and comprises plural energy production entities during insufficient natural energy availability wherein the amount of power received from the utility grid may be reduced and/or efficiency may be improved.

### Summary of the Invention

This need may be met by the subject matter according to the independent claims. Advantageous embodiments of the present invention are described by the dependent claims.

According to an embodiment of the present invention it is provided a method of controlling a natural energy production plant connectable or connected to a utility grid and comprising plural energy production entities, in particular wind turbines, during insufficient natural energy availability, the method comprising: providing first power from an energy storage system to the energy production entities; measuring second power provided to the energy production entities from the utility grid; controlling, in particular by a plant controller and/or respective energy production entity controllers, the energy production entities and/or the energy storage system based on the first power and/or the second power and/or a charge state of the energy storage system.

The method may be performed by one or more controller portions, such as partly by a plant controller and partly by many or plural controllers of the individual energy production entities. The method may be implemented in software and/or hardware. The method may employ measurement equipment which is capable of measuring the second power which is provided to the energy production entities from the utility grid.

During performing the method, the natural energy production plant may be connected to the utility grid. During particular time intervals, however, the natural energy production plant may not be connected to the utility grid but may be disconnected from the utility grid.

The natural energy production plant may be considered as an electrical power production facility which receives power from a natural (renewable) resource, for example excluding fossils, the natural resource for example comprising wind power, solar power, hydropower or the like. The natural energy production plant may be a renewable energy production plant. The natural energy production plant may comprise one type of energy production entities or a number of different types of energy production entities.

The utility grid may be an AC grid in particular three-phase utility grid to which plural consumers are connected or connectable to receive electrical energy from the utility grid.

The insufficient natural energy availability may mean that the natural energy or power which is currently available is lower than a natural energy or power in order for the natural energy production plant to generate electrical energy from the natural energy or natural power. For example, if the wind speed is below a minimum threshold, insufficient natural energy may be available. Another example may be that the sun irradiance is lower than an irradiance threshold such that insufficient natural energy is available to operate the solar plant for electrical power production. During the insufficient natural energy availability, the natural energy production plant is not capable of producing or generating electric energy which is suppliable to the utility grid.

In contrast, for maintaining functionality and secure operation of the natural energy production plant, the plant may require power to operate essential components like auxiliary systems. The auxiliary systems may include components of the plant which may be required to maintain safe operation of the plant and which may also be required for restarting or preparing to restart the plant after the period of insufficient natural energy availability is elapsed.

The energy storage system may comprise any storage system which is capable to store energy in any form but which may be capable of to be converted into the electrical power. The auxiliary systems comprised in the energy production entities may receive the first power in the form of electrical power from the energy storage system. Ideally, the first power may be sufficient to satisfy all requirements for power for the (auxiliary) systems of the energy production entities. In particular, the method may aim to control the energy storage system as well as the energy production entities such that the first power is sufficient to satisfy all requirements for power which is supplied to the energy production entities.

The method may be aimed and may be configured to reduce the requirements for power by the energy production entities taken from the utility grid. Thus, the method may aim to reduce the second power provided to the energy production entities from the utility grid.

In order to enable reducing the second power provided to the energy production entities from the utility grid, the second power is measured, in particular employing a measurement equipment. The measurement equipment may for example be configured to measure voltage and/or current (for example active current and/or reactive current) at a node which connects the entire natural energy production plant to the utility grid.

During the method, the energy production entities and/or the energy storage system are controlled based on the first power and/or the second power and/or a charge state of the energy storage system. In particular, the control method may include to limit the second power to be as low as possible, in particular being essentially zero, in order not to require purchasing power from the utility grid.

Furthermore, the method may be configured to control also the first power to comply with limitations of the energy storage system, in particular limitations of a converter or inverter comprised in the energy storage system. Such a converter may for example be limited regarding its power capacity. When the first power is limited, the inverter or the converter of the energy storage system may be downsized compared to a conventional system.

When one or more of the first power, the second power and the charge state of the energy storage system is or are considered for controlling the energy production entities and/or the energy storage system, the second power as taken from the utility grid may be reduced as well as the power capability of the energy storage system and energy capacity of the energy storage system may be respected. Thereby, operation and efficiency of the plant may be improved.

According to an embodiment of the present invention, controlling the energy production entities and/or the energy storage system based on the first power and/or the second power comprises at least one of: controlling the energy production entities to reduce or minimize their power consumptions and/or to enter a sleep mode, in particular by reducing or disabling at least one action; controlling the energy production entities such that the second power is below a, in particular active and/or reactive, grid power threshold or is substantially zero; controlling the energy storage system such that the first power is smaller than a, in particular active and/or reactive, energy storage system power limit.

The energy production entities may for example be controlled or commanded to allow operation of certain auxiliary components but may not allow other auxiliary systems to be operated. In other embodiments, the individual power consumption of individual auxiliary components may be controlled, in particular depending on the importance of the respective auxiliary equipment for safe and reliable operation of the respective energy production entity. For example, for particular types of auxiliary components, operation may be disabled or enabled.

Controlling the energy production entities may comprise to employ for example a PI controller, which for example receives a reference value of the second power and further receives the measured second power. Other implementations are possible. The power reference or grid power threshold may comprise an active grid power threshold and/or a reactive grid power threshold. The energy storage system power limit may be governed by a respective power limit of an inverter which is for example connected to a DC energy storage. Thereby, safe and reliable operation may be provided.

According to an embodiment of the present invention, the energy storage system is connectable or connected to at least one energy production entity the at least one energy production entity is controlled based on the first power and/or the second power; and/or wherein the energy storage system is connectable or connected to at least one connection node to which a string of energy production entities is connected and the string of energy production entities is controlled based on the first power and/or the second power; and/or wherein the energy storage system is connectable or connected to a (plant) connection node, in particular at a low voltage side of a plant transformer, to which all energy production entities are connected and all energy production entities are controlled based on the first power and/or the second power.

Thereby, different control or power supply at different levels is enabled. For example, the control or power supply may be on an individual energy production entity level, may be on a level of a string of energy production entities or may be on a plant level. Thereby, great flexibility is provided for serving different applications. The different configurations may require that the energy storage system is electrically connected either to each one of the energy production entities, at each string (or group) of the electrical production entities or (only) to an output node of the entire plant.

According to an embodiment of the present invention, the energy storage system comprises a DC energy storage and a DC-AC converter, and in particular a transformer, wherein controlling the energy storage system comprises controlling, in particular by the plant controller, the DC-AC converter, wherein the energy storage system comprises in particular at least one of: a battery energy storage system; a hydrogen electrolysis system; a fuel cell system; a flywheel.

The DC energy storage may comprise a battery energy storage system, for example also referred to as BESS. Thereby, conventionally available storage systems are supported.

According to an embodiment of the present invention, the DC-AC converter is limited regarding its power capacity by the energy storage system power limit, wherein the energy storage system power limit is in particular lower than a nominal or empirical total power requirement of the plant during insufficient natural energy availability.

The DC-AC converter may comprise plural controllable switches which may be operated by supplying particular gate signals to their gates. The DC-AC converter may be sized such that it is not capable of satisfying the power consumption from all energy production entities during the insufficient natural energy availability period. Thus, the DC-AC converter may be downsized, in order to save costs. Due to the control, the first power may be controlled to be below the energy storage system power limit, for example by commanding some of the auxiliary systems of some of the energy production entities to be deactivated or be downregulated.

According to an embodiment of the present invention, controlling the energy production entities comprises sending, from the plant controller, control signals to the energy production entity controllers; and controlling, by the respective energy production entity controllers, components of the respective energy production entity.

The plant controller may also receive the measurement signals from the measurement equipment in order to receive the measured value of the second power which is provided to the energy production entities from the utility grid. In particular embodiments of the present invention, also the first power which is provided from the energy storage system to the energy production entities is measured and is communicated to the central or plant controller. Thus, the plant controller may receive the measurement values of the second power, the measurement values of the first power (and/or charge state) and may, based on those, determine control signals which are then supplied to the individual energy production entities and/or storage system. Furthermore, the plant controller may supply control signals to the energy storage system, in particular the converter of the energy storage system in order to control the flow of the first power.

According to an embodiment of the present invention, controlling the energy production entities comprises determining a subset of energy production entities that are allowed to perform at least one power requiring action; controlling the subset of energy production entities to perform the at least one power requiring action; controlling other energy production entities, not included in the subset, not to perform the at least one power requiring action; the method in particular comprising, later, when the subset of energy production entities completed to perform the at least one power requiring action: controlling at least one of the other energy production entities, not included in the subset, to perform the at least one power requiring action.

Thereby, the amount of power required to be drawn from the utility grid may be controlled to be relatively low. Thereby, the consumption by particular auxiliary systems of different energy production entities may be scheduled and distributed over a prolonged time interval or time period, such that not all auxiliary systems of all energy production entities are operated at the same time, in order to limit the total amount of power required at a particular time instance. Thereby, limitations of the equipment of the energy storage system may be met as well as the second power may be limited in an advantageous manner.

According to an embodiment of the present invention, the at least one power requiring action comprises at least one of: a yawing action; a cooling action; a pumping action; a fan operating action; a shut down action; a going to idling action; a safety action.

Some of those mentioned actions may not be required to be performed at all energy producing entities at the same time or overlapping time but may be performed subsequently to each other. This is enabled in embodiments of the present invention. Thereby, actions of different energy production entities may be timed and scheduled in a manner such as to reduce the second power and also limit the first power as required or desired.

According to an embodiment of the present invention, measuring the second power comprises measuring second active power and/or second reactive power, and/or wherein the energy production entities comprise at least one transformer. Thereby, for example not only active power but also reactive power of the second power may be restricted or may be regulated to particular target or reference values depending on the application thereby providing great flexibility.

According to an embodiment of the present invention, the energy producing entities comprise at least one of: a wind turbine; a photovoltaic system; a tidal system; a hydropower system, wherein the insufficient natural energy availability is in particular characterized by at least one of: a wind speed is below a wind speed threshold; a solar irradiation is below an irradiation threshold; a power output of the energy production entities is below a minimal power output threshold. Thereby, conventional systems may be supported.

According to an embodiment of the present invention, the first power, and in particular the second power, is provided to plural components of the energy production entities, the components including at least one of; a wind turbine auxiliary component; a pump; a fan; a motor; a yaw actuator for turning a rotor axis; a pitch actuator for a wind turbine blade; a cooling system component; a heater system component; an illumination system; a light component; a control system; a communication system. The listed components may be examples of auxiliary equipment or auxiliary systems comprised in one or more of the energy production entities. Depending on the energy production entities, the plural components or auxiliary systems may include more or less of the above listed components.

It should be understood, that features, individually or in any combination, disclosed, explained, provided or applied within a method of controlling a natural energy production plant are also applicable, individually or in any combination, to an arrangement for controlling a natural energy production plant according to embodiments of the present invention and vice versa.

According to an embodiment of the present invention it is provided an arrangement for controlling a natural energy production plant connectable/connected to a utility grid and comprising plural energy production entities, in particular wind turbines, during insufficient natural energy availability, the arrangement comprising an energy storage system adapted to providing first power to the energy production entities; measuring equipment adapted to measure second power provided to the energy production entities from the utility grid; a control portion, in particular including a plant controller and/or respective energy production entity controllers, adapted to control the energy production entities and/or the energy storage system based on the first power and/or the second power and/or a charge state of the energy storage system.

The control portion may be implemented in one or more units, for example including a plant controller and/or respective energy production entities controllers. The arrangement may be configured to carry out a method according to embodiments as explained above.

According to an embodiment of the present invention it is provided a natural energy production plant comprising: plural energy production entities; and an arrangement according to the preceding embodiment. The plural energy production entities may comprise plural wind turbines according to an embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawing. The invention is not restricted to the illustrated or described embodiments.

The Figure schematically illustrates a natural energy production plant according to an embodiment of the present invention comprising an arrangement for controlling the natural energy production plant according to an embodiment of the present invention.

### Detailed Description

The natural energy production plant 1 schematically illustrated in the Figure comprises plural energy production entities 2a, 2b, 2c, 2d, 2e, 2f and an arrangement 3 for controlling the natural energy production plant 1 according to an embodiment of the present invention.

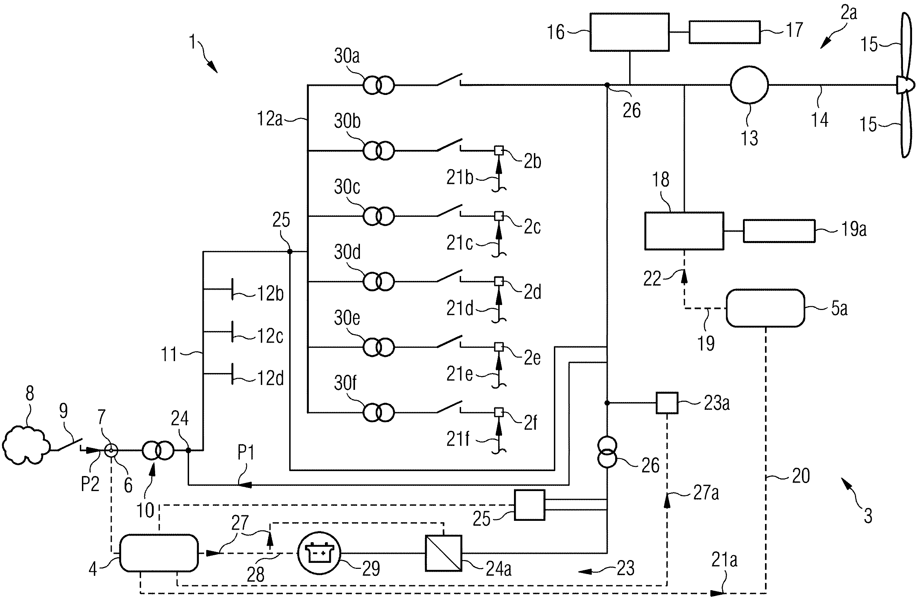

Thereby, the arrangement 3 comprises a plant controller 4, and respective energy production entity controllers from which only the entity controller 5a is illustrated in Fig. 1. The other energy production entities 2b, ..., 2f further also comprise a similar energy production entity controller as the controller 5a of the energy production entity 2a. The arrangement 3 further comprises, according to an embodiment of the present invention, measurement equipment 6 which is installed at a connection node 7 which connects the natural energy production plant 1 to a transmission grid 8 or utility grid 8. The transmission grid 8 is connectable via a switch 9 to the natural energy production plant 1.

The plant 1 comprises a plant transformer 10 which is connected with its secondary side providing e.g. 100 kV to the connection node 7. The primary side e.g. providing 33 kV is connected to a busbar 11 at which plural strings 12a, 12b, 12c, 12d of energy production entities are connected. For example, the string of wind turbines connected to the busbar 12a comprises the energy production entities 2a, 2b, ..., 2f. In the illustrated embodiment, the energy production entities comprise plural wind turbines, but may also include solar cells.

The energy production entity 2a illustrated in more detail in the Figure comprises a generator 13 which is connected to a rotation shaft 14 at which plural rotor blades 15 are mounted. The generator 13 may comprise a not in detail illustrated converter which may be capable of converting a variable frequency AC power stream to a fixed frequency power stream. The energy production entity 2a further comprises a UPS 16 which is connected to a 230 V system 17. The UPS 16 may supply energy or power in case of a fault in the system, in particular a fault in the energy production entity 2a.

The energy production entity 2a further comprises auxiliary equipment 18 which may for example comprise one or more pumps, one or more fans, one or more motors, one or more actuators, in particular a yaw actuator, a pitch actuator, a cooling system, a heating system, an illumination system, a light component, a control system and/or a communication system, depending on the particular application. The auxiliary equipment 18 is connected to a 690 V system 19a.

The energy production entity 2a further comprises an energy production entity controller 5a as has been mentioned above.

Via a communication line 19, the controller 5a is communicatively coupled to the auxiliary components 18 and thereby is enabled to control the auxiliary equipment 18 by respective control signals or control commands 22.

Each of the energy production entity controllers, such as controller 5a, is communicatively connected via a communication line 20 to the plant controller 4. Thereby, the plant controller 4 may send control signals 21 via the communication line 20 to the energy production entity controller 5a, whereupon the controller 5a may supply respective control signals 22 via the communication line 19 to the auxiliary equipment 18, in order to control operation of the auxiliary equipment 18.

The production plant 1 further comprises an energy storage system 23 which may be connected to one or more of the connection points 24, 25, 26 of the plant 1. It should be noted, that the energy storage system 23 may be connected to one or more of the connection points 24, 25, 26. According to a particular embodiment of the present invention, the energy storage system 23 is only connected to the connection point 24 located at a low voltage side of the plant transformer 10. The energy storage system comprises a DC-AC converter 24a, a grid monitoring system (GMS) 25 as well as a transformer 26.

The controller 4 may receive measurement results from the GMS 25 and/or may control the converter 24a by control signals 27. The transformer 26 can transform e.g. 0.4kV/33kV or 0.69kV/33kV or to lower or higher output voltage.

The arrangement 3 comprised in the production plant 1 is configured to carry out a method according to an embodiment of the present invention of controlling the natural energy production plant 1 in case of insufficient natural energy availability. During the method, first power P1 is provided (via connection point(s) 24 and/or 25 and/or 26) from the energy storage system 23 to the energy production entities 2a, 2b, ..., 2f of the string 12a as well as to other energy production entities comprised in the other strings 12b, 12c, 12d. Furthermore, the second power P2 provided to the energy production entities from the utility grid 8 is measured by the measurement equipment 6. The measurement equipment 6 could be located somewhere else at the plant output terminal or between the secondary side of transformer 10 and grid 8 or e.g. at the primary side of transformer 10.

Based on the first power P1 and/or the second power P2 and/or a charge state of the energy storage system 23, the plant controller 4 controls the respective energy production entity controllers 5a (and other not illustrated controllers) and/or storage system 23. Thereby, the plant controller 4 supplies respective control signals 27 to the energy storage system 23 (or BESS and GMS or converter 24a) via a communication line 28. The control signals 21a, ..., 21f supplied from the plant controller 4 to the energy production entity controllers 5a may for example indicate or prioritize to reduce or minimize their power consumption, in particular such that the second power P2 is below a predetermined grid power threshold or is substantially zero. Furthermore, the control signals 21a, ..., 21f provided to the energy production entity controllers 5a as well as the control signals 27 provided from the plant controller 4 to the energy storage system 23 may be such that the first power P1 is smaller than an energy storage system power limit. The energy storage system is in the illustrated example connectable or connected to a plant connection node 24 at the low voltage side of the plant transformer 10 to which all energy production entities are connected.

The energy storage system 23 comprises a DC energy storage 29, the DC-AC converter 24a and the transformer 26, which may be optional. In particular, the DC-AC converter 24a may be limited regarding its power capacity by the energy storage system power limit mentioned above.

The DC energy storage 23 may comprise an accumulator and/or a battery and/or a fuel cell (for converting H2 to electricity or vice versa).

Another or a same type of storage system 23a may additionally be connected to one or more of the connection points 24, 25, 26. The storage system 23a may e.g. comprises a fuel cell, a converter and/or an active filter and/or a measurement equipment and/or a transformer, in particular similarly arranged as in storage system 23. The storage system 23a may also be controlled by the controller 4 by control signals 27a.

The different energy production entities 2a, ..., 2f may receive the respective control signals 21a, ..., 21f from the plant controller 4. Thereby, the particular control commands 21a, ..., 21f may indicate to a subset of the energy production entities to allow to perform at least one power requiring action but prohibiting another or others of the other energy production entities from performing the respective action. At a later time, when the subset of energy production entities has completed the power requiring action, others than the subset of the energy production entities may be commanded or be allowed to perform the power requiring action.

For example, only a subset of the energy production entities, in particular wind turbines, may be allowed to perform a yawing action while the others are not allowed to perform the yawing action. At a later time period, the other wind turbines may then be allowed to perform the yawing action, in order to limit the first power to be below the limit and also to reduce or minimize for example the second power P2 as drawn from the utility grid 8.

The arrangement 3 comprises the energy storage system 23 adapted to providing first power P1 to the energy production entities 2a, ..., 2f. Further, the arrangement comprises the measurement equipment 6 adapted to measure the second power provided to the energy production entities 2a, ..., 2f from the utility grid 8. Further, the arrangement 3 comprises the control portion which is implemented in the illustrated embodiment by the plant controller 4 as well as the individual energy production entity controllers 5a (and other not explicitly illustrated controllers).

The power plant systems, in particular the auxiliary systems 18 for each of the energy producing entities, may consume energy when either the wind turbine or the solar panels are not producing enough power or energy. By doing an active and reactive current/power measurement (for example using the measurement equipment 6 illustrated in the Figure), when the plant obtains energy, the park controller or individual controllers will communicate to the consumers to enter a "sleep" mode or a mode of minimum power consumption. This may not be limited to minimum but may also entitle to control how many consumers can be activated at the same time. For example, the control signals 21a, ..., 21f sent by the plant controller 4 to the individual energy production entities may indicate that a predetermined number of turbines may only yaw or operate the given pump or fan at the same time to minimize current inrush when starting (for example desired for weak grids). This may limit the size of needed inverters and battery discharging capacity of the energy storage system 23.

The system may also be employed when a wind turbine only produces hydrogen and oxygen where the whole electrical grid is removed and replaced after the plant transformer or the wind turbine transformer (for example transforming ....69 kV to 33 kV), to supply auxiliary power during wind below possible energy production or in the case that the turbine is down due to an error.

The electrical storage system 23 may comprise a battery electric storage system but other solutions may exist such as hydrogen electrolyzes with fuel cell systems or other energy storage systems.

Embodiments of the present invention provide three different models which may be referred to as individual level, string level and plant level. The individual level may be achieved when the energy storage system 23 is connected to each of the energy production entities, via respective connection point(s) 26 and respective others not illustrated to the other energy production entities 2b, ..., 2f. The string level may be achieved when the energy storage system 23 is connected for example to the point 25 which is connected to a particular string connection bus 12a connected to a string of wind turbines or in general energy production entities. The plant level may be formed when the energy storage system 23 is connected to the plant connection node 24 for example. The consumption at the plant-level is measured using measurement equipment 6 for example. Then, the power is delivered to either:
- one turbine and that turbine supplies the rest of the site
- string and that string supplies the rest of the site
- site, the battery supplies the entire site.

Embodiments of the present invention provide or use an energy storage system to prevent or reduce the flow of power into the renewable power plant and for the hydrogen turbine to keep the systems up and running and save shutdown when the generator is disconnected (thereby preventing the power plant from becoming a consumer of energy). An advantage may be to reduce the costs associated with the purchase of electrical energy from the utility grid 8.

By reducing or even avoiding consumption of energy from the external grid, the power plant may reduce its carbon emissions by avoiding use of energy that may be generated by carbon intensive technologies and weak grids during low renewable power production.

Controlling the power consumption on the park level rather than on the individual wind turbine level may in an improved manner enable to control the power flow as close to zero as possible, in particular regarding the second power P2. Thereby, overuse or oversize of the energy storage system may be avoided. Some energy storage systems, such as battery electric storage, can have a limited number of lifetime cycles and so overuse may lead to early end of life and replacement needs.

Embodiments of the present invention may allow to control a particular set of auxiliary equipment of a particular set of energy producing entities to be activated or to be disabled or enabled simultaneously to advantageously dimension the power inverters and battery discharge capacity. Conventionally, a system has not been considered for an off-grid wind turbine only equipped with electrolyzer to keep the turbine and electrolyzer ancilla systems alive during generator cutout.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a natural energy production plant (1) connectable or connected to a utility grid (8) and comprising plural energy production entities (2a,2b,...,2f), in particular wind turbines, during insufficient natural energy availability, the method comprising:
providing first power (P1) from an energy storage system (23) to the energy production entities (2a,2b,...,2f);
measuring second power (P2) provided to the energy production entities (2a,2b,...,2f) from the utility grid (8);
controlling, in particular by a plant controller (4) and/or respective energy production entity controllers (5a), the energy production entities (2a,2b,...,2f) and/or the energy storage system (23) based on the first power (P1) and/or the second power (P2) and/or a charge state of the energy storage system (23).

2. Method according to the preceding claim, wherein controlling the energy production entities (2a,2b,...,2f) and/or the energy storage system (23) based on the first power (P1) and/or the second power (P2) comprises at least one of:
controlling the energy production entities (2a,2b,...,2f) to reduce or minimize their power consumptions and/or to enter a sleep mode, in particular by reducing or disabling at least one action;
controlling the energy production entities (2a,2b,...,2f) such that the second power (P2) is below a, in particular active and/or reactive, grid power threshold or is substantially zero;
controlling the energy storage system (23) such that the first power (P1) is smaller than a, in particular active and/or reactive, energy storage system power limit;

3. Method according to one of the preceding claims,
wherein the energy storage system (23) is connectable or connected (26) to at least one energy production entity (2a), the at least one energy production entity is controlled based on the first power and/or the second power; and/or
wherein the energy storage system (23) is connectable or connected to at least one connection node (25) to which a string (12a) of energy production entities (2a,2b,...,2f) is connected and the string of energy production entities is controlled based on the first power and/or the second power; and/or
wherein the energy storage system (23) is connectable or connected to a plant connection node (24), in particular at a low voltage side of a plant transformer (10), to which all energy production entities (2a,2b,...,2f) are connected and all energy production entities are controlled based on the first power and/or the second power.

4. Method according to one of the preceding claims, wherein the energy storage system (23) comprises a DC energy storage (29) and a DC-AC converter (24a), and in particular a transformer (26), wherein controlling the energy storage system comprises controlling, in particular by the plant controller, the DC-AC converter,
wherein the energy storage system comprises in particular at least one of:
a battery energy storage system;
a hydrogen electrolysis system;
a fuel cell system;
a flywheel.

5. Method according to the preceding claim, wherein the DC-AC converter (24a) is limited regarding its power capacity by the energy storage system power limit,
wherein the energy storage system power limit is in particular lower than a nominal or empirical total power requirement of the plant during insufficient natural energy availability.

6. Method according to one of the preceding claims, wherein controlling the energy production entities comprises:
sending, from the plant controller (4), control signals (21a, ..., 21f) to the energy production entity controllers (5a) ;
controlling, by the respective energy production entity controllers (5a), components (18) of the respective energy production entity (2a).

7. Method according to one of the preceding claims, wherein controlling the energy production entities (2a,2b,...,2f) comprises:
determining a subset of energy production entities that are allowed to perform at least one power requiring action;
controlling the subset of energy production entities to perform the at least one power requiring action;
controlling other energy production entities, not included in the subset, not to perform the at least one power requiring action;
the method in particular comprising, later, when the subset of energy production entities completed to perform the at least one power requiring action:
controlling at least one of the other energy production entities, not included in the subset, to perform the at least one power requiring action.

8. Method according to the preceding claim, wherein the at least one power requiring action comprises at least one of:
a yawing action;
a cooling action;
a pumping action;
a fan operating action;
a shut down action;
a going to idling action;
a safety action.

9. Method according to one of the preceding claims,
wherein measuring the second power (P2) comprises measuring second active power and/or second reactive power, and/or
wherein the energy production entities (2a,2b,...,2f) comprise at least one transformer (30a, ..., 30f).

10. Method according to one of the preceding claims, wherein the energy producing entities (2a,2b,...,2f) comprise at least one of:
a wind turbine;
a photovoltaic system;
a tidal system;
a hydropower system;
wherein the insufficient natural energy availability is in particular **characterized by** at least one of:
a wind speed is below a wind speed threshold;
a solar irradiation is below an irradiation threshold;
a power output of the energy production entities is below a minimal power output threshold.

11. Method according to one of the preceding claims, wherein the first power (P1), and in particular the second power (P2), is provided to plural components (18) of the energy production entities (2a,2b,...,2f), the components including at least one of;
a wind turbine auxiliary component;
a pump;
a fan;
a motor;
a yaw actuator for turning a rotor axis;
a pitch actuator for a wind turbine blade;
a cooling system component;
a heater system component;
an illumination system;
a light component;
a control system;
a communication system.

12. Arrangement (3) for controlling a natural energy production plant (1) connectable/connected to a utility grid (8) and comprising plural energy production entities (2a,2b,...,2f), in particular wind turbines, during insufficient natural energy availability, the arrangement comprising:
an energy storage system (23) adapted to providing first power (P1) to the energy production entities (2a,2b,...,2f);
measuring equipment (6) adapted to measure second power (P2) provided to the energy production entities (2a,2b,...,2f) from the utility grid (8);
a control portion, in particular including a plant controller (4) and/or respective energy production entity controllers (5a), adapted to control the energy production entities (2a,2b,...,2f) and/or the energy storage system (23) based on the first power (P1) and/or the second power (P2) and/or a charge state of the energy storage system (23).

13. Natural energy production plant (1) comprising:
plural energy production entities (2a,2b,...,2f); and
an arrangement (3) according to the preceding claim.

14. Natural energy production plant according to the preceding claim,
wherein the plural energy production entities (2a,2b,...,2f) comprise plural wind turbines.
